Europäisches Patentamt

European Patent Office

Office européen des brevets

(11) Veröffentlichungsnummer: **0 191 452**
**B1**

# (12) EUROPÄISCHE PATENTSCHRIFT

(45) Veröffentlichungstag der Patentschrift:
10.05.89

(51) Int. Cl.⁴: **G 06 F 7/48**, G 06 F 7/02

(21) Anmeldenummer: 86101688.9

(22) Anmeldetag: 10.02.86

(54) **Verfahren und Schaltungsanordnung zur Überwachung der Summe bzw. Differenz zweier Grössen durch Vergleich mit einer dritten Grösse in binärer Darstellung.**

(30) Priorität: 11.02.85 DE 3504559

(43) Veröffentlichungstag der Anmeldung:
20.08.86 Patentblatt 86/34

(45) Bekanntmachung des Hinweises auf die Patenterteilung:
10.05.89 Patentblatt 89/19

(84) Benannte Vertragsstaaten:
AT BE CH DE FR GB IT LI NL SE

(56) Entgegenhaltungen:
IBM TECHNICAL DISCLOSURE BULLETIN, Band 25,
Nr. 8, Januar 1983, Seiten 4086-4089, New York, US;
F.T. BLOUNT: "High speed comparators involving
sums and differences"
IBM TECHNICAL DISCLOSURE BULLETIN, Band 8,
Nr. 3, August 1965, Seiten 407-408, New York, US;
J.C. KENNEDY et al.: "No-ripple, parallel, high-lowequal comparator"

(73) Patentinhaber: Siemens Aktiengesellschaft Berlin
und München, Wittelsbacherplatz 2, D-8000
München 2 (DE)

(72) Erfinder: Ziemann, Wolfgang, Tulpenweg 3, D-8011
Höhenkirchen- Siegertsbrunn (DE)

EP 0 191 452 B1

**Beschreibung**

Die Erfindung betrifft ein Verfahren und Anordnung zur Überwachung der Summe bzw. der Differenz zweier Größen durch Vergleich mit einer dritten Größe in binärer Darstellung.

Handelt es sich bei den drei Größen, z. B. der Beziehung A + B = C um drei Variable, so wird die Summe der Größen A und B in der Regel mit einem Addierwerk ermittelt und dann mit der dritten Größe C verglichen. Bei einem Addierwerk wächst aber mit zunehmender Stellenzahl der beiden Operandengrößen wegen der zu berücksichtigenden Überträge die Laufzeit, da ein Vergleich mit einer höherwertigen Ergebnisbitstelle immer erst vorgenommen werden kann, wenn alle niederwertigeren Ergebnisbitstellen berechnet sind.

Ist eine der Größen konstant, dann kann in einigen trivialen Fällen, z. B. für A + 0 = C mit A = C oder bei Verwendung von vorgegebenen binären Inkrementen bzw. Dekrementen, z. B. bei A + 8 = C mit (A - 2) = (C - 8) oder mit (A + 6) = (C + 2) ein einfacher Vergleich zur Überwachung ausgeführt werden. Abgesehen davon, daß eine Vielzahl von Inkrementen und/ oder Dekrementen erforderlich wäre, um alle möglichen Konstanten K beispielsweise der Beziehung A + K = C zu erfassen, was den Aufwand eines Addierwerkes bei weitem überschreiten würde, sind auch hierbei die Laufzeiten von der Operandenbreite abhängig.

Es ist daher Aufgabe der Erfindung, Verfahren und Anordnungen der eingangs genannten Art zu schaffen, die weitgehend unabhängig von der Stellenzahl der einzelnen Operanden bei möglichst geringem Aufwand in möglichst kurzer Zeit eine Aussage über die Einhaltung bzw. Nichteinhaltung einer vorgegebenen Beziehung ermöglichen.

Diese Aufgabe wird bei den Verfahren gemäß der Erfindung durch die Merkmale im kennzeichnenden Teil des Patentanspruches 1 gelöst.

Danach wird in Umkehrung des einer Addition bzw. Subtraktion zugrundeliegenden Prinzips anhand derselben gültigen Wahrheitstabelle für jede Ziffernstelle mit dem zugehörigen Ziffernwert der Vergleichsgröße als Ergebnisziffernwert der zugehörige Eingangs- und Ausgangsübertrag ermittelt. Von der niedrigsten Ziffernstelle ausgehend wird dann der jeweils ermittelte Ausgangsübertrag einer Ziffernstelle mit dem jeweils ermittelten Eingangsübertrag der nächst höheren Ziffernstelle und der für die niederwertigste Ziffernstelle (0) ermittelte Eingangsübertrag ($CIN_0$) mit dem Wert Null als Anfangseingangsübertrag verglichen. Da die so miteinander verglichenen Überträge voraussetzungsgemäß immer gleich sein müssen, läßt sich aus den Vergleichsergebnissen in einfacher Weise eine Aussage darüber treffen, ob die zu prüfende Beziehung eingehalten worden ist oder nicht. Die Ermittlung der beiden Überträge je Ziffernstelle ist dabei unabhängig von der Überprüfung vorausgehender niederwertiger Ziffernstellen, so daß die Überträge aller Ziffernstellen gleichzeitig ermittelt und geprüft werden können. Die Dauer für die Ermittlung des jeweiligen Prüfergebnisses ist damit unabhängig von der Stellenzahl der Operanden.

Weiterbildungen des Verfahrens gemäß der Erfindung entsprechend den Patentansprüchen 2 bis 4 beziehen sich auf die Verknüpfung der drei in Beziehung zu setzenden Größen, je nachdem, ob diese dem dualen Zahlensystem oder einem anderen Zahlensystem angehören. Beim vom dualen Zahlensystem abweichenden Zahlensystem erfolgt demgemäß eine Zerlegung der einzelnen Ziffernwerte je Stelle in Teilziffernwerte von den Primfaktoren des der ursprünglichen Zahlenbasis entsprechenden Zahlensystemen, wobei für vom dualen Zahlensystem abweichende Zahlensysteme anhand von Kontrollwerten zusätzlich zu prüfen ist, ob die Überträge eindeutig bestimmbar sind.

Der Grundaufbau einer entsprechend arbeitenden Anordnung gemäß der Erfindung ergibt sich aus den Merkmalen im kennzeichnenden Teil des Patentanspruches 5. Danach werden für jede Ziffernstelle eine Verknüpfungsschaltung und zusätzlich bei insgesamt n Verknüpfungsschaltungen n-1 Überwachungsschaltungen sowie ein Verknüpfungsglied zur Bildung der von den Überwachungsschaltungen gelieferten Einzelsteuersignale benötigt. Der Aufbau der einzelnen Verknüpfungsschaltungen richtet sich dabei nach dem jeweils zugrundeliegenden Zahlensystem; er ist beim Dualsystem am einfachsten. Bei anderen Zahlensystemen gliedern sich die Verknüpfungsschaltungen entsprechend den zu bildenden Teilziffernwerten in Teilverknüpfungsschaltungen und es sind für jede Teilverknüpfungsschaltung zusätzlich Prüfschaltungen erforderlich. Entsprechende Weiterbildungen ergeben sich aus den Patentansprüchen 6 bis 8.

Einzelheiten der Erfindung seien nachfolgend anhand von in der Zeichnung dargestellten Ausführungsbeispielen erläutert. Im einzelnen zeigen

| Fig 1 | ein Übersichtsschaltbild zur Erläuterung des der Erfindung zugrundeliegenden Lösungsprinzips, |
|---|---|
| Fig 2 | ein Blockschaltbild als Teil einer Kontrollschaltung gemäß der Erfindung für ein Dualsystem, |
| Fig 3 | die zugehorige Wahrheitstabelle mit den Verknüpfungsbeziehungen für die Ermittlung der Überträge, |
| Fig 4 | eine Schaltungsanordnung für die Verknüpfungsschaltungen der Anordnung von Fig 2, |
| Fig 5 bis Fig 8 | vereinfachte Schaltungsanordnungen als Ersatz für die Schaltungsanordnung von Fig 4 bei Berücksichtigung von Konstanten anstelle einer der drei variablen Größen, |
| Fig 9 | eine der Schaltungsanordnung von Fig 4 entsprechende Schaltungsanordnung mit einem Multiplexer, |
| Fig 10 | ein Blockschaltbild in Anlehnung an das von Fig 2 für vom Dualsystem abweichende Zahlensysteme, |
| Fig 11 | eine Zuordnungstabelle für ein Dezimalsystem in BCD-Codierung, |

2

Fig 12      eine Zuordnungstabelle für die den vier möglichen Übertragskombinationen je Ziffernstelle entsprechenden Kontrollwerte,

Fig 13      ein Blockschaltbild einer Verknüpfungsschaltung der Anordnung von Fig 10,

Fig 14      den prinzipiellen Aufbau einer Schaltungsanordnung für eine Teilverknüpfungsschaltung der Verknüpfungsschaltung von Fig 13, aus Volladdierern mit nachgeschalteter Prüfschaltung,

Fig 15      eine Wahrheitstabelle für die Prüfschaltung von Fig 14 und

Fig 16      eine Schaltungsanordnung in Anlehnung an die Teilverknüpfungsschaltung von Fig 14 mit Multiplexern.

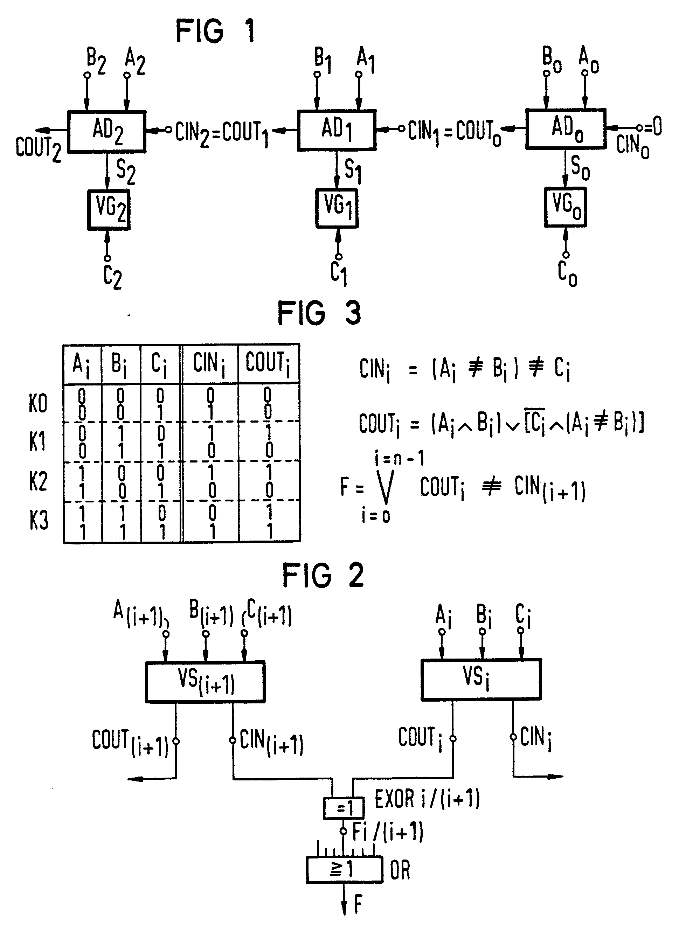

Das Übersichtsschaltbild von Fig 1 zeigt die bei stellenweiser Addition der einzelnen Stellen $A_i$ und $B_i$ der beiden Operanden

$$1)\ A = \sum_{i=0}^{i=n} A_i \cdot ZB^i = A_n \cdot ZB^n + \ldots + A_1 \cdot ZB^1 + A_o \cdot ZB^o$$

$$2)\ B = \sum_{i=0}^{i=n} B_i \cdot ZB^i = B_n \cdot ZB^n + \ldots + B_1 \cdot ZB^1 + B_o \cdot ZB^o$$

mit der Zahlenbasis ZB durch individuelle Addiereinrichtungen $AD_i$ bestehenden Beziehungen zwischen den einzelnen Ausgangsüberträgen $COUT_i$ und den einzelnen Eingangsüberträgen $CIN_{(i+1)}$, wenn die sich ergebende Summe

$$3)\ S = \sum_{i=0}^{i=n} S_i \cdot ZB^i = S_n \cdot ZB^n + \ldots + S_1 \cdot ZB^1 + S_o \cdot ZB^o$$

gleich der Vergleichsgröße

$$4)\ C = \sum_{i=0}^{i=n} C_i \cdot ZB^i = C_n \cdot ZB^n + \ldots + C_1 \cdot ZB^1 + C_o \cdot ZB^o$$

sein soll, was stellenweise durch die Vergleicher $VG_i$ überprüft wird. Daraus ergibt sich je Stelle folgende Bedingung

$$5)\ CIN_i + A_i + B_i = C_i + COUT_i \cdot ZB$$

wenn $A + B = C$ erfüllt sein soll und dementsprechend $COUT_i = CIN_{(i+1)}$ und $CIN_0 = 0$ ist.

Man kann also durch Vergleich der für jeweils zwei benachbarte Ziffernstellen aus den Größen $A_i$, $B_i$ und $C_i$ sowie $A_{(i+1)}$, $B_{(i+1)}$ und $C_{(i+1)}$ vorherbestimmbaren Überträge $COUT_i$ und $CIN_{(i+1)}$ sowie durch Vergleich des für die niederwertigste Ziffernstelle ermittelten Eingangsübertrages $CIN_0$ mit dem Wert Null als Anfangseingangsübertrag mit n Vergleichsprüfungen bei n-stelligen Operanden die Einhaltung der Beziehung $A + B = C$ in einfacher Weise überprüfen.

Da die Eingangs- und Ausgangsüberträge $CIN_i$ und $COUT_i$ jeweils lediglich die Werte 0 oder 1 annehmen können, ergeben sich entsprechend den vier möglichen Übertragskombinationen aus Formel 5 gemäß der nachfolgenden Tabelle lediglich vier zulässige Werte für die Beziehung $(A_i + B_i - C_i)$:

| Tabelle | $CIN_i$ | $COUT_i$ | $A_i + B_i - C_i$ |
|---|---|---|---|
| | 0 | 0 | 0 |
| | 1 | 0 | -1 . |
| | 0 | 1 | ZB |
| | 1 | 1 | ZB-1 |

Nur wenn zusätzlich eine dieser vier Bedingungen erfüllt ist, lassen sich aus den drei Größen $A_i$, $B_i$ und $C_i$ die jeweils zugehörigen Überträge $CIN_i$ und $COUT_i$ je Stelle i eindeutig bestimmen und der Vergleich $COUT_i = CIN_{(i+1)}$ durchführen.

Der Ausdruck $A_i + B_i - C_i$ liefert aber abhängig von der Zahlenbasis ZB des jeweils vorgegebenen Zahlensystems entsprechend $Z_i = A_i + B_i - C_i$ mehr als vier Ergebnisse. So ergibt sich beispielsweise bei der Zahlenbasis ZB = 5 eine Ergebnisbreite zwischen

$$Z_{i\text{-}min} = 0 + 0 - 4 = -4 \text{ und}$$

$$Z_{i\text{-}max} = 4 + 4 - 0 = 8 = 3 + ZB,$$

3

d. h. alle Ergebnisse $Z_i$ zwischen den werten -4 und +8 sind kombinatorisch möglich, wobei jedoch nur die Werte -1, 0, 4 und 5 eine der vier Randbedingungen erfüllen. Lediglich bei der Zahlenbasis ZB = 2 ergeben sich für alle möglichen Kombinationen von $A_i$, $B_i$ und $C_i$ Ergebnisse, die in allen Fällen einem der sich für das Dualsystem ergebenden vier Kontrollwerte -1, 0, 1 und 2 entsprechen, so daß auf die Prüfung der vier vorangehend genannten Zusatzbedingungen verzichtet werden kann.

Fig 2 zeigt ein allgemeines Blockschaltbild einer Kontrollschaltung zur Überwachung der Beziehung A + B = C auf der Basis eines dualen Zahlensystems mit der Zahlenbasis ZB = 2, wobei lediglich die Verknüpfungsschaltungen $VS_i$ und $VS_{(i + 1)}$ für zwei Binärstellen i und i + 1 zur Ableitung der einzelnen Überträge $CIN_i$ und $COUT_i$ sowie $CIN_{(i + 1)}$ und $COUT_{(i + 1)}$ zusammen mit einer den Vergleich von $COUT_i$ und $CIN_{(i + 1)}$ durchführenden Überwachungsschaltung in Form eines exklusiven ODER-Gliedes $EXOR_{i/(i + 1)}$ und ein nachgeschaltetes ODER-Glied OR zur Zusammenfassung der Ausgangssignale aller benötigten Überwachungsschaltungen dargestellt sind. Die vollständige Kontrollschaltung umfaßt daher bei operanden mit i = n Stellen insgesamt n Verknüpfungsschaltungen VS... und n Überwachungsschaltungen EXOR... . Sind die jeweils zu vergleichenden Überträge zweier Operandenstellen ungleich, so liefert die Überwachungsschaltung, z. B. $EXOR_{i/(i + 1)}$, ein Fehlersignal $F_{i/(i + 1)} = 1$, das durch das ODER-Glied OR zum Fehlersignal F = 1 der gesamten Kontrollschaltung wird.

Die Verknüpfungsbedingungen für die Ableitung der Überträge $CIN_i$ und $COUT_i$ je Operandenstelle i läßt sich in einfacher Weise aus der im linken Teil von Fig 3 dargestellten Wahrheitstabelle ableiten. Die entsprechenden Verknüpfungsbeziehungen sind im rechten Teil von Fig 3 angegeben.

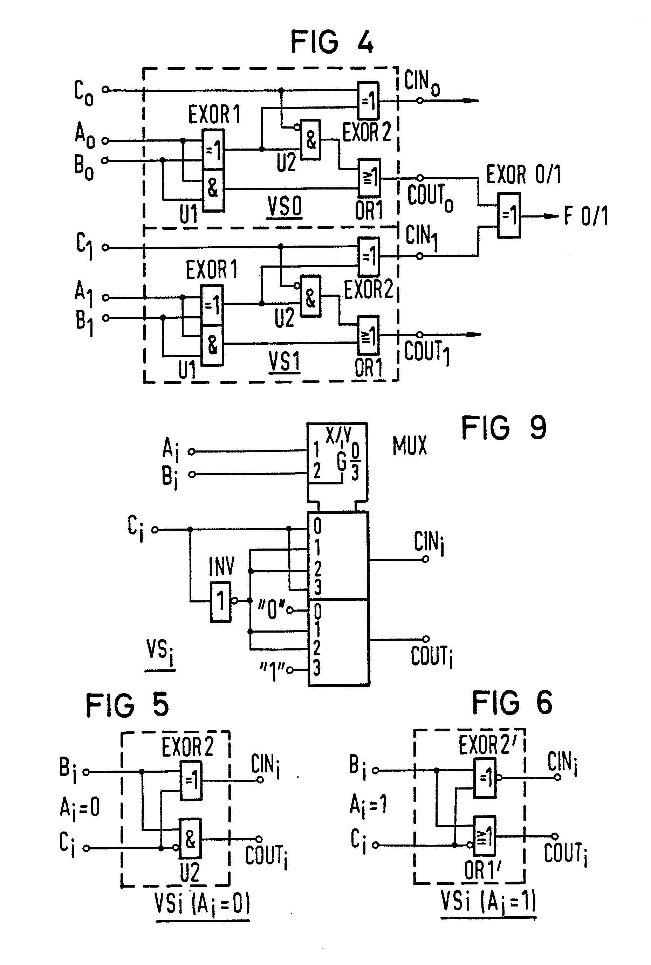

Fig 4 zeigt den in Fig 2 dargestellten Schaltungsteil ohne das Ausgangs-ODER-Glied OR mit zwei entsprechend den Verknüpfungsbedingungen von Fig 3 arbeitenden Verknüpfungsschaltungen $VS_0$ und $VS_1$ für die Bitstellen i = 0 und i + 1 = 1. Danach erfolgt die Ableitung des Eingangsübertrags $CIN_i$ mit zwei exklusiven ODER-Gliedern EXOR1 und EXOR2, während der Ausgangsübertrag $COUT_i$ entweder durch das UND-Glied U1 oder aber durch Ausnutzung des exklusiven ODER-Gliedes EXOR1 in Verbindung mit dem UND-Glied U2 gebildet wird, wobei die Ausgänge der beiden UND-Glieder U1 und U2 durch das ODER-Glied OR1 zusammengefaßt werden. Der Aufbau der beiden Verknüpfungsschaltungen $VS_0$ und $VS_1$ entspricht im wesentlichen dem eines normalen Volladdierers für zwei Operandenbits $A_i$ und $B_i$, bei dem der Anschluß für den Eingangsübertrag CIN mit $C_i$ beschaltet ist, wobei jedoch für die Bildung des Ausgangsübertrages $COUT_i$ das Signal $C_i$ am Eingang des UND-Gliedes U2 invertiert wird und der Ergebnisausgang den Eingangsübertrag $CIN_i$ liefert.

Anstelle eines Volladdierers für die einzelnen Verknüpfungsschaltungen VS... in Fig 4 können für einzelne Bitstellen mit konstanten Ziffernwerten 0 oder 1 für einen der Operanden A oder B oder für die Vergleichsgröße C auch vereinfachte Verknüpfungsschaltungen $VS_i$ verwendet werden, während Volladdierer nur für die Bitstellen mit variablen Ziffernwerten verwendet werden.

Fig 5 und Fig 6 zeigen entsprechend vereinfachte Verknüpfungsschaltungen für den Fall, daß $A_i$ = 0 = konstant bzw. $A_i$ = 1 = konstant ist. In beiden Fällen verringert sich der Aufwand gegenüber einem Volladdierer auf ein exklusives ODER-Glied und ein UND- oder ODER-Glied, wobei die Bezeichnungen gleich den Bezeichnungen für die entsprechenden Verknüpfungselemente des universelleren Volladdierers von Fig 4 gewählt und durch Invertierung der Signale bedingte Abänderungen durch ein ' gekennzeichnet sind. Die Signalzuordnungen ergeben sich dabei in einfacher Weise aus der Wahrheitstabelle von Fig 3.

Die gleichen Verknüpfungsschaltungen sind verwendbar, wenn statt des Operanden A der Operand B konstante Ziffernwerte für die einzelnen Bitstellen aufweist. Die Anschlüsse für die Operandenstellensignale $B_i$ sind dann einfach durch $A_i$ zu ersetzen.

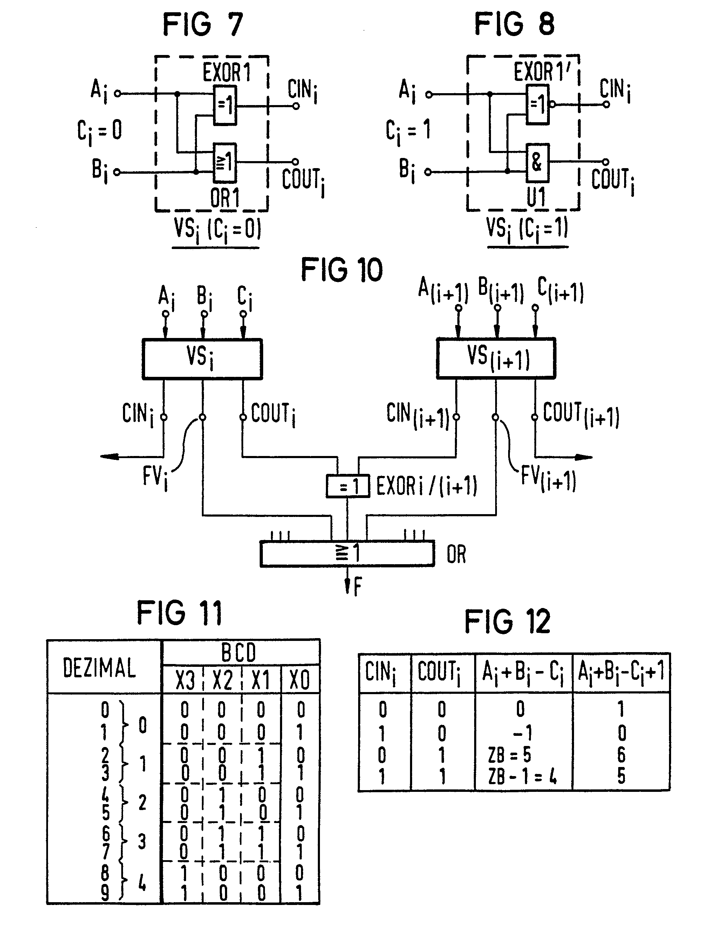

Fig 7 und Fig 8 zeigen die in gleicher Weise aus dem Volladdierer von Fig 4 in Verbindung mit der Wahrheitstabelle von Fig 3 ableitbaren vereinfachten Verknüpfungsschaltungen für den Fall, daß Bitstellen der Vergleichsgröße C konstante Ziffernwerte aufweisen.

Statt eines Volladdierers gemäß Fig 4 für die einzelnen Verknüpfungsschaltungen kann gemäß Fig 9 auch ein wesentlich schneller arbeitender Multiplexer MUX mit zwei Steuereingängen verwendet werden, dem die beiden Operandenstellensignale $A_i$ und $B_i$ zugeführt werden. Aus zwei Gruppen von jeweils vier Eingangssignalen wird dann je eines auf die beiden Ausgänge für die Überträge $CIN_i$ und $COUT_i$ durchgeschaltet. Die Beschaltung für die Eingangssignale ergibt sich dabei wiederum in einfacher Weise aus der Wahrheitstabelle von Fig 3 abhangig von den vier möglichen Signalkombinationen K0 bis K3 für die einzelnen Operandensignale $A_i$ und $B_i$. Danach ist $CIN_i = C_i$ für die Kombinationen K0 und K3 und $CIN_i = \bar{C}_i$ für die Kombinationen K1 und K2 was den Inverter INV bedingt. In ähnlicher Weise gilt $COUT_i = 0$ für die Kombination K0, $COUT_i = 1$ für die Kombination K3 sowie $COUT_i = \bar{C}_i$ für die Kombinationen K1 und K2.

Aus den verschiedenen Verknüpfungsschaltungen VS... von Fig 4 bis Fig 9 lassen sich in beliebiger Kombination zusammengesetzte Kontrollschaltungen in der für den jeweiligen Anwendungsfall günstigsten Form aufbauen.

Das vorangehend erläuterte Grundprinzip ist, wie bereits vorangehend erwähnt, nicht nur für Größen des binären Zahlensystems mit der Zahlenbasis ZB = 2, sondern auch für alle anderen Zahlensysteme mit anderen Zahlenbasen anwendbar. Dazu müssen die einzelnen Ziffern des anderen Zahlensystems lediglich in eine entsprechende Anzahl von Ziffern des Dualsystems überführt werden. So kann z. B. eine Ziffer des Hexadezimalsystems entsprechend $16 = 2^4$ durch vier Ziffern des Dualsystems dargestellt werden, und eine Ziffer des Dezimalsystems läßt sich entsprechend 10 = 2.5 durch eine Ziffer des Dualsystems und eine Ziffer des Fünfersystems darstellen, wobei die Ziffer des Fünfersystems durch drei weitere Ziffern des Dualsystems ersetzt wird. Der Aufbau der Verknüpfungsschaltungen gestaltet sich dabei umso einfacher, je kleiner die Primfaktoren sind, in die sich die jeweilige Zahlenbasis - wie vorangehend angedeutet - zerlegen läßt.

Fig 10 zeigt in Anlehnung an das Beispiel von Fig 2 einen Teil der sich dann ergebenden Kontrollschaltung, wobei die einzelnen Verknüpfungsschaltungen neben den beiden für den Vergleich benötigten Überträgen ein weiteres Kontrollsignal, z. B. FVi, liefern, das anzeigt, ob die einzelnen Überträge eindeutig bestimmbar sind oder nicht, worauf bereits eingangs hingewiesen worden ist. Diese zusätzlichen Signale FV... werden wie die Ausgangssignale der Überwachungsschaltungen, z. B. $EXOR_{i/(i + 1)}$, dem gemeinsamen Ausgangs-ODER-Glied OR der Kontrollschaltung zugeführt.

Nachfolgend sei der Aufbau einer Verknüpfungsschaltung $VS_i$ einer Kontrollschaltung für das Dezimalsystem in BCD-Codierung erläutert. Fig 11 zeigt das zugehörige, an sich bekannte Codierungsschema mit vier Bitstellen X0 bis X3, von denen die Bitstelle X0 als eigenständige Dualziffer und die Bitstellen X1 bis X3 zusammen als eigenständige Ziffer des Fünfersystems behandelt werden, was durch die waagerechte gestrichelte Unterteilung der Tabelle und die entsprechende paarweise erfolgte Zusammenfassung der Dezimalziffern zu den Ziffernwerten 0 bis 4 des Fünfersystems angedeutet ist.

Die Tabelle von Fig 12 zeigt die sich bei der Zahlenbasis ZB = 5 ergebenden Kontrollwerte für die Beziehung $A_i + B_i - C_i$, die den möglichen Übertragskombinationen von $CIN_i$ und $COUT_i$ entsprechen und von denen einer jeweils eingehalten sein muß. Um die Überprüfung zu erleichtern, wird der Ausdruck $A_i + B_i - C_i$ um das Glied +1 erweitert und es werden entsprechend erhöhte, insgesamt positive Kontrollwerte gemäß der rechten Spalte überprüft.

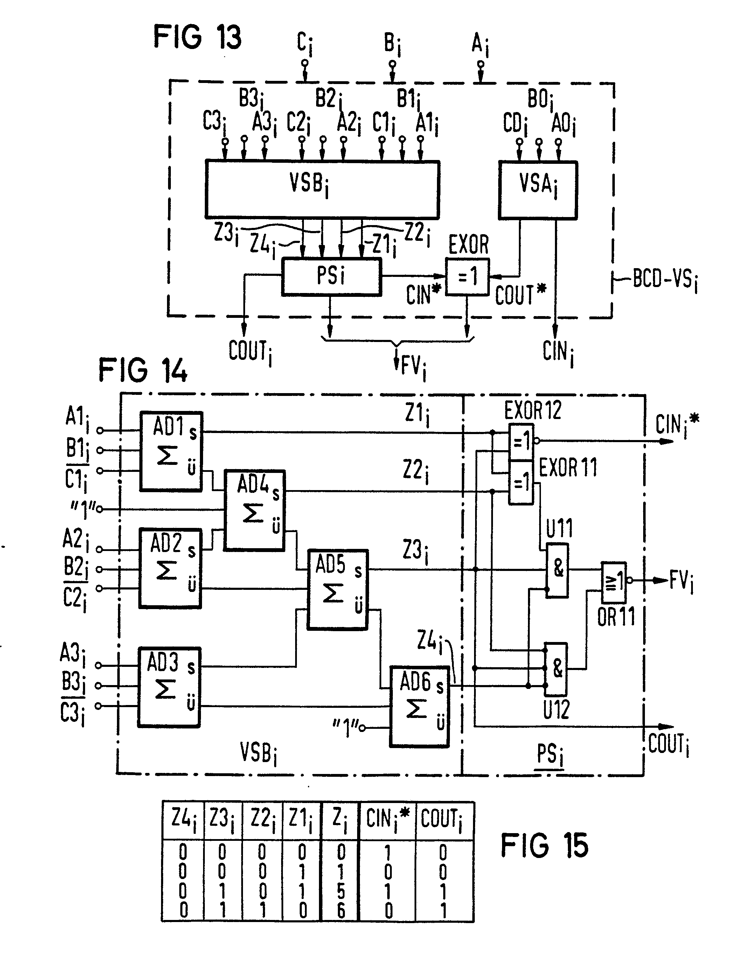

Die in Fig 10 benötigten Verknüpfungsschaltungen VS... gliedern sich wegen der binären Darstellung der operanden A und B sowie der Vergleichsgröße C in der Regel in mehrere Teilschaltungen entsprechend der Anzahl der die jeweils geltende Zahlenbasis bildenden Primfaktoren. Bei der zugrundegelegten BCD-Codierung sind es zwei Teilschaltungen, nämlich eine $VSA_i$ für das Zweiersystem und eine $VSB_i$ für das Fünfersystem, wie Fig 13 zeigt. Die Prüfschaltung $PS_i$ zur Prüfung auf Einhaltung der zulässigen Kontrollwerte ist dabei nur für vom Zweiersystem abweichende Zahlensysteme erforderlich. Jedoch sind wie bei der gesamten Kontrollschaltung die internen Überträge CIN* und COUT* der einzelnen Teilschaltungen durch Überwachungsglieder, z. B. in Form von exklusiven ODER-Gliedern EXOR, zu prüfen.

Die Teilschaltungen für das Zweiersystem, also z. B. $VSA_i$, können wie die anhand von Fig 4 bis Fig 9 bereits erläuterten Verknüpfungsschaltungen ausgebildet sein.

Ausgangspunkt für die Ausbildung der Teilschaltungen $VSB_i$ für die vom Zweiersystem abweichenden Zahlensysteme ist die aus der Beziehung 5) auf Seite 5 mit dem Komplement $\bar{C}_i = ZB - C_i - 1$ und folglich $-C_i = \bar{C}_i + 1 + ZB$ ableitbare Beziehung

6) $A_i + B_i + \bar{C}_i + ZB = COUT_i \cdot ZB - CIN_i + 1 = Z_i$

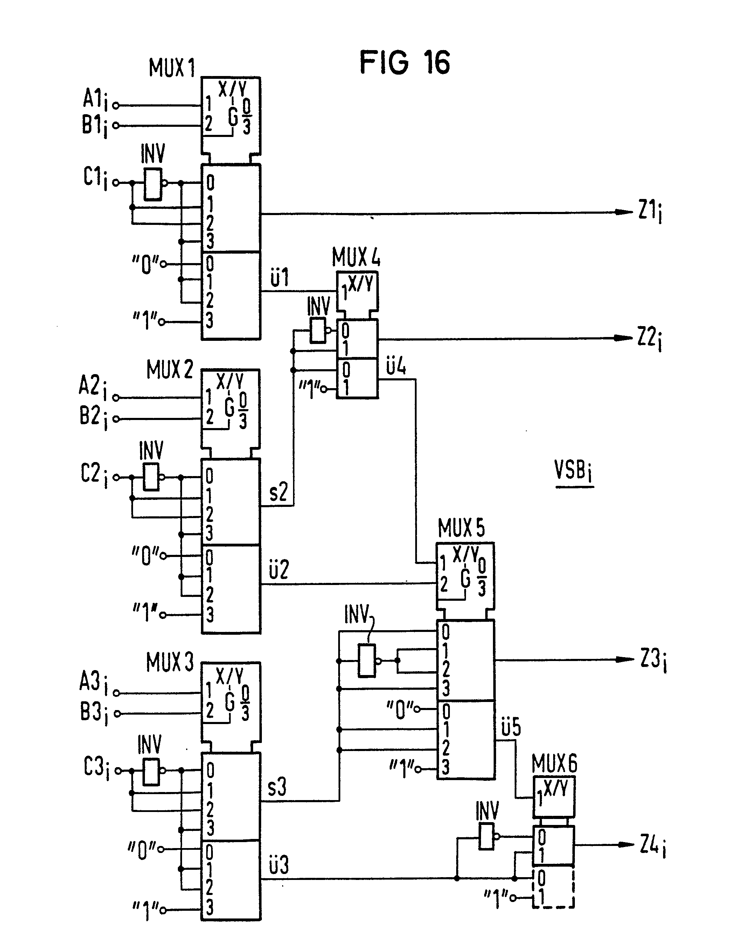

wobei die drei Größen $A_i$, $B_i$ und $\bar{C}_i$ entsprechend dem zugrundegelegten Fünfersystem jeweils von den Bitstellen X1 bis X3 in der Tabelle von Fig 11 entsprechenden drei Bitstellen gebildet werden. Die Realisierung des linken Teiles der vorgenannten Verknüpfungsbeziehung erfordert gemäß Fig 14 zunächst für jede der drei Bitstellen einen Volladdierer AD1 bis AD3, sowie zur Verknüpfung der stellengleichen Ergebnisse und Überträge drei weitere Volladdierer AD4 bis AD6. Das von den Ergebnisausgängen s der Addierer AD1 und AD4 bis AD6 gelieferte Ergebnis $Z_i = A_i + 2 + B_i + \bar{C}_i$ mit den Stellensignalen $Z1_i$ bis $Z4_i$ ohne Berücksichtigung des Übertrags der letzten Stelle wird dann gemäß der Tabelle von Fig 15 zur Prüfung auf das Vorliegen eines der einzuhaltenden Kontrollwerte 0, 1, 5 oder 6 überwacht und zur Ableitung der Übertragssignale $COUT_i$ und CIN* ausgenutzt.

Die Ableitung des Fehlersignals $FV_i$ ergibt sich daher entsprechend der Beziehung

7) $FV_i = \overline{(\overline{Z4}_i \wedge \overline{Z3}_i \wedge \overline{Z2}_i) \vee [\overline{Z4}_i \wedge Z3_i \wedge (Z2_i \neq Z1_i)]}$

und für die Überträge gilt demzufolge $COUT_i = Z3_i$ und CIN* $= Z1_i \equiv Z3_i$, wenn die Kontrollwerte eingehalten sind. Die Ableitung dieser drei Größen erfolgt innerhalb der Prüfschaltung $PS_i$ durch zwei UND-Glieder U11 und U12, ein ODER-Glied OR11 und zwei Exklusiv-ODER-Glieder EXOR11 und EXOR12.

Die Grundschaltung gemäß Fig 14 läßt sich z. B. mit Volladdierern in Anlehnung an die zur Bildung der Verknüpfungsschaltung $VS_i$ in Fig 4 realisieren, wobei die Invertierung am Eingang des UND-Gliedes U2 entfällt und die Addierer AD4 und AD6 wegen der Konstanten entsprechend Fig 6 und Fig 8 vereinfacht werden können. Zweckmäßiger aber sind wegen der Hintereinanderschaltung von vier Volladdierern stattdessen Schaltungen mit Multiplexern in Anlehnung an Fig 9, wobei bei entsprechender Beschaltung der Signaleingänge statt der Signale für $\bar{C}_i$ auch die Signale für $C_i$ verwendet werden können. Fig 15 zeigt ein entsprechendes Ausführungsbeispiel für die Verknüpfungsschaltung $VSB_i$ des Fünfersystems.

In analoger Weise lassen sich die Verknüpfungsbeziehungen und Schaltungen zur Überwachung auf Einhaltung der Beziehung A - B = C ableiten.

# EP 0 191 452 B1

**Patentansprüche**

1. Verfahren zur Überwachung der Summe bzw. Differenz zweier Größen (z. B. A und B) durch Vergleich mit einer dritten Größe (z. B. C) in binärer Darstellung, <u>dadurch gekennzeichnet</u>, daß je Ziffernstelle (z. B. $i = 0$ bis n) aus den zugehörigen Ziffernwerten $A_i$, $B_i$, und $C_i$ der drei Größen A, B und C jeweils die für die Ziffernstelle bei Durchführung der Addier- bzw. Subtrahierfunktion unter Zugrundelegung des Ziffernwertes der Vergleichsgröße als Ergebniswert sich normalerweise ergebenden Überträge $CIN_i$ und $COUT_i$ am Eingang und am Ausgang entsprechend der zugehörigen Wahrheitstabelle ermittelt werden, daß ausgehend von der niederwertigsten Ziffernstelle (0) jeweils der ermittelte Ausgangsübertrag (z. B. $COUT_i$) einer Ziffernstelle (z. B. i) mit dem für die nachfolgende Ziffernstelle (z. B. $i + 1$) ermittelten Eingangsübertrag (z. B. $CIN_{(i + 1)}$) und der für die niederwertigste Ziffernstelle (0) ermittelte Eingangsübertrag ($CIN_0$) mit dem Wert Null als Anfangseinangsübertrag verglichen wird und daß bei Nichtübereinstimmung bzw. Übereinstimmung eines der miteinander verglichenen n Übertragspaare (z. B. $COUT_i$ und $CIN_{(i + 1)}$) die Nichteinhaltung bzw. Einhaltung der zu prüfenden Beziehung (z. B. $A + B = C$) kennzeichnendes Steuersignal (z. B. F) ausgelöst wird.

2. Verfahren nach Anspruch 1, <u>dadurch gekennzeichnet</u> daß für dem Dualsystem mit der Zahlenbasis (ZB) Zwei angehörende Größen A, B und C die Überträge aus den Ziffernwerten $A_i$, $B_i$ und $C_i$ je Bitstelle entsprechend den Beziehungen

$$COUT_i = (A_i \wedge B_i) \vee [\bar{C}_i \wedge (A_i \neq B_i)]$$

und

$$CIN_i = (A_i \neq B_i) \neq C_i$$

ermittelt werden.

3. Verfahren nach Anspruch 1 oder 2, <u>dadurch gekennzeichnet</u> daß zur Überwachung von einem anderen (z. B. Zehnersystem mit Zahlenbasis $ZB = 10$) als dem Dualsystem angehörenden Größen A, B und C die zuständige Zahlenbasis (z. B. $ZB = 10$) in Primfaktoren zerlegt wird und aus den Ziffernwerten $A_i$, $B_i$ und $C_i$ der drei Größen Teilziffernwerte (z. B. $AO_i$, $BO_i$ $CO_i$ sowie $Ax_i = A1_i$ bis $A3_i$; $Bx_i = B1_i = B1_i$ bis $B3_i$ und $Cx_i = C1_i$ bis $C3_i$) der durch die Primfaktoren (z. B. 2 und 5) als Zahlenbasen festgelegten Zahlensysteme gebildet werden, daß für die vom Dualsystem abweichenden Zahlensysteme (z. B. Fünfersystem mit Zahlenbasis $ZB = 5$) aus den Teilziffernwerten $Ax_i$ $Bx_i$, und $Cx_i$ die Ergebnisse $Zx_i = Ax_i + Bx_i - Cx_i$ ermittelt und mit den aufgrund der Beziehung

$$Zx_i = Ax_i + Bx_i - Cx_i = COUTx_i \cdot ZB - CINx_i$$

vorgegebenen vier möglichen Kontrollwerten 0, -1, ZB-1, ZB verglichen werden, daß bei Übereinstimmung des Ergebnisses mit einem der vier Kontrollwerte die diesem zugehorigen Überträge (z. B. $CIN^*$ und $COUT_i$) für den Teilziffernwert bereitgestellt werden und daß die je Zahlensystem aus den Teilziffernwerten ermittelten internen Übertragspaare (z. B. $COUT^*$ und $CIN^*$) ebenfalls auf die jeweils einzuhaltende Gleichheit überprüft werden.

4. Verfahren nach Anspruch 3, <u>dadurch gekennzeichnet</u> daß aus den Teilziffernwerten $Ax_i$, $Bx_i$ und $Cx_i$ die Ergebnisse

$$Zx_i = Ax_i + Bx_i + \bar{C}\tilde{x}_i + 2 + ZB$$

ermittelt und mit den Kontrollwerten 0, 1, ZB und $(ZB + 1)$ verglichen werden.

5. Anordnung zur Durchführung des Verfahrens nach einem der Ansprüche 1 bis 4, <u>gekennzeichnet</u> durch eine Verknüpfungsschaltung ($VS_i$) je Ziffernstelle ($i = 0$ bis n) der drei n-stelligen Größen A, B und C zur Ermittlung der Überträge für die jeweils zugehörige Ziffernstelle, durch n Überwachungsschaltungen (z. B. $EXOR_{i/(i + 1)}$) zur Überwachung der einander entsprechenden Überträge (z. B. $COUT_i$ und $CIN_{(i - 1)}$) aufeinanderfolgender Ziffernstellen (z. B i und ($i + 1$)) auf Übereinstimmung und durch ein Verknüpfungsglied (z. B OR) zur Zusammenfassung der von den einzelnen Überwachungsschaltungen (EXOR... gelieferten Einzelsteuersignale (z. B. $F_{i/(i + 1)}$) zu einem gemeinsamen Steuersignal (z. B. F) zur Kennzeichnung der Nichteinhaltung bzw. der Einhaltung der zu prüfenden Beziehung (z. B. $A + B = C$).

6. Anordnung nach Anspruch 5 zur Durchführung der Verfahren nach Anspruch 3 oder 4, <u>dadurch gekennzeichnet</u> daß die Verknüpfungsschaltung ($VS_i$) je Ziffernstelle ($i = 0$ bis n) der drei Größen A, B und C aus Teilverknüpfungsschaltungen (z. B. $VSA_i$ und $VSB_i$) für jeden der entsprechend der Anzahl der zugrundezulegenden Zahlensysteme zu bildenden Teilziffernwerte bestehen, daß mit jeder Teilverknüpfungsschaltung (z. B. $VSB_i$) eine Prüfschaltung ($PS_i$) zur Prüfung der entsprechend der Beziehung

$$Zx_i = Ax_i + Bx_i - Cx_i \text{ bzw. } Zx_i = Ax_i + Bx_i + \bar{C}\tilde{x}_i + 2 + ZB$$

ermittelten Ergebnisse auf Einhaltung der vorgegebenen Kontrollwerte und zur Ableitung der zugehörigen Überträge (z. B. $CIN^*$ und $COUT_i$) gekoppelt ist, daß bei insgesamt m Teilverknüpfungsschaltungen $m - 1$

zusätzliche Überwachungsschaltungen (EXOR) zur Überwachung der einander entsprechenden Überträge zwischen den einzelnen Teilziffernstellen auf die einzuhaltende Gleichheit vorgesehen sind und daß die Ausgangssignale so wohl der Überwachungsschaltung (EXOR) als auch der Prüfschaltung ($PS_i$) als Teilsteuersignale ($FV_i$) zur Kennzeichnung der Nichteinhaltung bzw. der Einhaltung jeweils mit dem das gemeinsame Steuersignal (F) erzeugende Verknüpfungsglied (OR) verbunden sind.

7. Anordnung nach Anspruch 5 oder 6, <u>dadurch gekennzeichnet</u> daß die Verknüpfungsschaltungen ($VS_i$) und/oder Teilverknüpfungsschaltungen (z. B. $VSB_i$) aus Volladdierern (AD1 bis AD6) mit entsprechend den zu erfüllenden Verknüpfungsbedingungen angepaßten Zuordnungen der Signalein- und -ausgänge bestehen.

8. Anordnung nach Anspruch 5 oder 6, <u>dadurch gekennzeichnet</u> daß die Verknüpfungsschaltungen ($VS_i$) und/oder Teilverknüpfungsschaltungen (z. B. $VSB_i$) aus Multiplexern (z. B. MUX1 bis MUX6) mit entsprechend den zu erfüllenden Verknüpfungsbedingungen angepaßten Zuordnungen der Signalein- und -ausgänge bestehen, wobei jeweils zwei der drei Eingangsgrößen auf zwei Steuereingänge einwirken und aus zwei Gruppen von je vier Eingangssignalen jeweils eines als die beiden Ausgangssignale auswählen, die unmittelbar den beiden zugehörigen Überträgen bzw. Zwischenergebnissen und/oder weiterzuverarbeitenden Teilergebnissen und Teilüberträgen entsprechen.

## Claims

1. Method for monitoring the sum or difference of two quantities (for example A and B) by comparison with a third quantity (for example C) in binary representation, characterised in that for each digit position (for example i = 0 to n) in each case the tallies $CIN_i$ and $COUT_i$ at the input and at the output normally resulting as a result value for the digit position when carrying out the adding or subtracting function using as a basis the digit value of the comparison quantity are determined from the associated digit values $A_i$, $B_i$ and $C_i$ of the three quantities A, B and C in accordance with the associated truth table, that, on the basis of the least significant digit position (0) in each case the output carry (for example $COUT_i$) determined of a digit position (for example i) is compared with the input carry (for example $CIN_{(i + 1)}$) determined for the subsequent digit position (for example i + 1) and the input carry ($CIN_0$) determined for the least significant digit position (0) is compared with the value 0 as initial input carry and that in the case of non-correspondence or correspondence of one of the n carry pairs compared with one another (for example $COUT_i$ and $CIN_{(i + 1)}$), a control signal (for example F) identifying the nonsatisfaction or satisfaction of the relation to be tested (for example A + B = C) is triggered.

2. Method according to Claim 1, characterised in that for quantities A, B and C belonging to the binary system having the numerical base (ZB) two, the carries from the digit values $A_i$, $B_i$ and $C_i$ are determined for each bit position in accordance with the relations

$$COUT_i = (A_i \wedge B_i) \vee [\bar{C}_i \wedge (A_i \neq B_i)]$$

and

$$CIN_i = (A_i \neq B_i) \neq C_i.$$

3. Method according to Claim 1 or 2, characterised in that for monitoring quantities A, B and C belonging to a different system than the binary system (for example decimal system with the numerical base ZB = 10), the associated numerical base (for example ZB = 10) is split into prime factors and from the digit values $A_i$, $B_i$ and $C_i$ of the three quantities part-digit values (for example $A0_i$, $B0_i$, $C0_i$ and $Ax_i = A1_i$ to $A3_i$, $Bx_i = B1_i$ to $B3_i$ and $Cx_i = C1_i$ to $C3_i$) of the numerical systems determined as numerical bases by the prime factors (for example 2 and 5) are formed, that for the numerical systems deviating from the binary system (for example system of fives with the numerical basis ZB = 5) from the part-digit values $Ax_i$, $Bx_i$ and $Cx_i$ the results $Zx_i = Ax_i + Bx_i - Cx_i$ are determined and compared with the four possible control values 0, -1, ZB-1, ZB predetermined on the basis of the relation

$$Zx_i = Ax_i + Bx_i - Cx_i = COUTx_i \times ZB - CINx_i$$

that when the result corresponds with one of the four control values the carries associated with it (for example $CIN^*$ and $COUT_i$) for the part-digit value are made available and that the internal carry pairs (for example $COUT^*$ and $CIN^*$) determined for each numerical system from the part-digit values are also checked for the equality to be maintained in each case.

4. Method according to Claim 3, characterised in that from the part-digit values $Ax_i$, $Bx_i$ and $Cx_i$ the results

$$Zx_i = Ax_i + Bx_i + \bar{Cx} i + 2 + ZB$$

are determined and compared with the control values 0, 1, ZB and (ZB + 1).

5. Arrangement for carrying out the method according to one of Claims 1 to 4, characterised by a combinatorial circuit ($VS_i$) for each digit position (i = 0 to n) of the three n-position quantities A, B and C for

7

determining the carries for the in each case associated digit position, by n monitoring circuits (for example $EXOR_{i/(i+1)}$) for monitoring the carries corresponding to one another (for example $COUT_i$ and $CIN_{(i+1)}$) of successive digit positions (for example i and (i + 1)) for correspondence and by a combinatorial element (for example OR) for combining the individual control signals (for example $F_{i/(i+1)}$) supplied by the individual monitoring circuits (EXOR...) to form a common control signal (for example F) for identifying the non-maintenance or the maintenance of the relation to be tested (for example A + B = C).

6. Arrangement according to Claim 5 for carrying out the method according to Claim 3 or 4, characterised in that the combinatorial circuit ($VS_i$) for each digit position (i = 0 to n) of the three quantities A, B and C consists of part-combinatorial circuits (for example $VSA_i$ and $VSB_i$) for each of the part-digit values to be formed in accordance with a number of the numerical systems to be used as a basis, that each part-combinatorial circuit (for example $VSB_i$ is connected to a test circuit ($PS_i$) for testing the results determined in accordance with the relation

$$Zx_i = Ax_i + Bx_i - Cx_i \text{ and/or } Zx_i = Ax_i + Bx_i + \bar{C}\check{x}_i + 2 + ZB$$

for maintenance of the predetermined control values and for deriving the associated carries (for example $CIN^*$ and $COUT_i$), that with a total of m part-combinatorial circuits m - 1 additional monitoring circuits (EXOR) for monitoring the carries corresponding to one another between the individual part digit positions for the equality to be maintained are provided and that the output signals both of the monitoring circuit (EXOR) and of the test circuit ($PS_i$), as part-control signals ($FV_i$) for identifying the non-maintenance or the maintenance, are in each case connected to the combinatorial element (OR) generating the common control signal (F).

7. Arrangement according to Claim 5 or 6, characterised in that the combinatorial circuits ($VS_i$) and/or part-combinatorial circuits (for example $VSB_i$) consist of four adders (AD1 to AD6) with allocations of the signal inputs and outputs adapted in accordance with the combinatorial conditions to be met.

8. Arrangement according to Claim 5 or 6, characterised in that the combinatorial circuits ($VS_i$) and/or part-combinatorial circuits (for example $VSB_i$) consist of multiplexers (for example MUX1 to MUX6) with allocations of the signal inputs and outputs adapted in accordance with the combinatorial conditions to be met, in which arrangement in each case two of the three input quantities act on two control inputs and select from two groups of four input signals each in each case one as the two output signals which directly correspond to the two associated carries or intermediate results and/or part results and part carries to be processed further.


**Revendications**

1. Procédé pour contrôler la somme ou la différence de deux grandeurs (par exemple A et B) par comparaison à une troisième grandeur (par exemple C) en représentation binaire, caractérisé par le fait que pour chaque chiffre (par exemple i = 0 à n) on détermine, à partir des valeurs chiffrées associées $A_i$, $B_i$ et $C_i$ des trois grandeurs A, B et C respectivement les reports $CIN_i$ et $COUT_i$, obtenus normalement à l'entrée et à la sortie pour le chiffre lors de l'exécution de la fonction d'addition ou de soustraction en prenant pour base la valeur chiffrée de la grandeur de comparaison en tant que résultat, conformément à la table de vérité associée, qu'à partir du chiffre le plus faible (0), on compare respectivement le report de sortie déterminé (par exemple $COUT_i$) d'un chiffre (par exemple i) au report d'entrée (par exemple $CIN_{(i+1)}$) déterminé par le chiffre suivant (par exemple i + 1) et au report d'entrée($CIN_0$) déterminé pour le chiffre le plus faible (0), en prenant la valeur zéro comme report d'entrée initial, et que, dans le cas d'une non coïncidence ou d'une coïncidence des n couples de reports comparés entre eux (par exemple $COUT_i$ et $CiN_{(i+1)}$), un signal de commande (par exemple F) caractérisant le non respect ou le respect de la relation à vérifier (par exemple A + B = C), est émis.

2. Procédé suivant la revendication 1, caractérisé par le fait que pour des grandeurs A, B et C appartenant au système binaire à base (ZB) deux, on détermine les reports à partir des valeurs chiffrées $A_i$, $B_i$ et $C_i$, pour chaque position binaire, conformément aux relations

$$COUT_i = (A_i \wedge B_i) \vee [\bar{C}_i \wedge (A_i \neq B_i)]$$

et

$$CIN_i = (A_i \neq B_i) \neq C_i.$$

3. Procédé suivant la revendication 1 ou 2, caractérisé par le fait que pour contrôler une grandeur (A, B et C) appartenant à un système (par exemple le système décadique à base de numération ZB = 10) autre que le système binaire, on décompose la base de numération associée (par exemple ZB = 10) en facteurs primaires, et on forme, à partir des valeur chiffrées $A_i$, $B_i$ et $C_i$ des trois grandeurs, des valeurs chiffrées partielles (par exemple $A0_i$, $B0_i$, $C0_i$ ainsi que $Ax_i = A1_i$ à $A3_i$, $Bx_i = B1_i$ à $B3_i$ et $Cx_i = C1_i$ à $C3_i$) des systèmes de numération fixés en tant que bases de numération par les facteurs primaires (par exemple 2 et 5), que pour les systèmes de numération (par exemple le système de numération à base cinq ZB = 5) différents du système binaire, on détermine les résultats $Zx_i = Ax_i + Bx_i - Cx_i$ à partir des valeurs chiffrées partielles $Ax_i$, $Bx_i$ et $Cx_i$ et on les

compare à quatre valeurs de contrôle possibles 0, -1, ZB-1, ZB prédéterminées sur la base de la relation

$$Zx_i = Ax_i + Bx_i - Cx_i = COUTx_i \cdot ZB - CINx_i$$

que, en cas de coïncidence du résultat avec l'une des quatre valeurs de contrôle, les reports (par exemple CIN* et COUT$_i$) associés à cette valeur sont préparés pour la valeur chiffrée partielle, et que les couples internes de reports (par exemple COUT* et CIN*), déterminés pour chaque système de numération à partir des valeurs chiffrées partielles, sont également vérifiés pour savoir si on obtient l'égalité devant être respectée.

4. Procédé suivant la revendication 3, caractérisé par le fait qu'à partir des valeurs chiffrées différentielles Ax$_i$, Bx$_i$ et Cx$_i$ on détermine les résultats

$$Zx_i = Ax_i + Bx_i + \bar{C}\bar{x} i + 2 + ZB$$

et on les compare aux valeurs de contrôle 0, 1, ZB et (ZB + 1).

5. Dispositif pour la mise en oeuvre du procédé suivant l'une des revendications 1 à 4, caractérisé par un circuit combinatoire (VS$_i$) prévu pour chaque chiffre (i = 0 à n) des trois grandeurs A, B et C à n chiffres, pour la détermination des reports pour le chiffre respectivement associé, par n circuits de contrôle (par exemple EXOR$_{i/(i + 1)}$) servant à contrôler si la coïncidence existe entre les reports (par exemple COUT$_i$ et CIN$_{(i + 1)}$), qui se correspondent entre eux, de chiffres successifs (par exemple i et (i + 1)) et par un circuit combinatoire (par exemple OR) servant à réunir les signaux individuels de commande (par exemple F$_{i/(i + 1)}$) délivrés par les différents circuits de contrôle (EXOR...), pour former un signal commun de commande (par exemple F) servant à caractériser le non respect ou le respect de la relation à vérifier (par exemple A + B = C).

6. Dispositif suivant la revendication 5 pour la mise en oeuvre du procédé suivant la revendication 3 ou 4, caractérisé par le fait que le circuit combinatoire (VS$_i$) est constitué pour chaque chiffre (i = 0 à n) des trois grandeurs (A, B et C), par des circuits combinatoires partiels (VSA$_i$ et VSB$_i$) pour chacune des valeurs chiffrées partielles devant être formées conformément au nombre des systèmes de numération utilisés et qu'à chaque circuit combinatoire partiel (par exemple VSB$_i$) est accouplé un circuit de vérification (PS$_i$) servant à vérifier les résultats déterminés conformément à la relation

$$Zx_i = Ax_i + Bx_i - Cx_i \text{ ou } Zx_i = Ax_i + Bx_i + \bar{C}\bar{x}_i + 2 + ZB$$

pour savoir si les valeurs de commande prédéterminées sont respectées et pour en dériver les reports associés (par exemple CIN* et COUT$_i$), que dans le cas d'un ensemble de m circuits combinatoires partiels, il est prévu m - 1 circuits supplémentaires de contrôle (EXOR) servant à contrôler les reports, qui se correspondent entre eux, entre les différentes valeurs chiffrées partielles, de manière à établir si l'égalité est respectée, et que les signaux de sortie aussi bien du circuit de contrôle (EXOR) que du circuit de vérification (PS$_i$) sont réunis, en tant que signaux de commande partiels (FV$_i$) pour caractériser le non respect ou le respect de l'égalité, respectivement avec le circuit combinatoire (OR) produisant le signal commun de commande (F).

7. Dispositif suivant la revendication 5 ou 6, caractérisé par le fait que les circuits combinatoires (VS$_i$) et/ou les circuits combinatoires partiels (par exemple VSB$_i$) sont constitués par des additionneurs complets (AD1 à AD6), dont les entrées et sorties des signaux sont associées d'une manière adaptée en fonction des conditions combinatoires devant être satisfaites.

8. Dispositif suivant la revendication 5 ou 6, caractérisé par le fait que les circuits combinatoires (VS$_i$) et/ou les circuits combinatoires partiels (par exemple VSB$_i$) sont constitués par des multiplexeurs (par exemple MUX1 à MUX6), dont les entrées et sorties des signaux sont associées d'une manière adaptée en fonction des conditions combinatoires devant être satisfaites, respectivement deux des trois grandeurs d'entrée agissant sur deux entrées de commande, et sélectionnant respectivement un signal parmi deux groupes contenant chacun quatre signaux d'entrée, pour constituer les deux signaux de sortie, qui correspondent directement aux deux reports ou résultats intermédiaires associés et/ou résultats partiels et reports partiels dont le traitement doit se poursuivre.

## FIG 1

$B_2$ $A_2$ $B_1$ $A_1$ $B_0$ $A_0$

$AD_2$ $AD_1$ $AD_0$

$COUT_2$ $CIN_2 = COUT_1$ $CIN_1 = COUT_0$ $CIN_0 = 0$

$S_2$ $S_1$ $S_0$

$VG_2$ $VG_1$ $VG_0$

$C_2$ $C_1$ $C_0$

## FIG 3

| | $A_i$ | $B_i$ | $C_i$ | $CIN_i$ | $COUT_i$ |
|---|---|---|---|---|---|
| K0 | 0 | 0 | 0 | 0 | 0 |
| | 0 | 0 | 1 | 1 | 0 |
| K1 | 0 | 1 | 0 | 1 | 0 |
| | 0 | 1 | 1 | 0 | 1 |
| K2 | 1 | 0 | 0 | 1 | 0 |
| | 1 | 0 | 1 | 0 | 1 |
| K3 | 1 | 1 | 0 | 0 | 1 |
| | 1 | 1 | 1 | 1 | 1 |

$$CIN_i = (A_i \neq B_i) \neq C_i$$

$$COUT_i = (A_i \wedge B_i) \vee [\overline{C_i} \wedge (A_i \neq B_i)]$$

$$F = \bigvee_{i=0}^{i=n-1} COUT_i \neq CIN_{(i+1)}$$

## FIG 2

$A_{(i+1)}$ $B_{(i+1)}$ $C_{(i+1)}$ $A_i$ $B_i$ $C_i$

$VS_{(i+1)}$ $VS_i$

$COUT_{(i+1)}$ $CIN_{(i+1)}$ $COUT_i$ $CIN_i$

$=1$ EXOR i/(i+1)

$Fi/(i+1)$

$\geq 1$ OR

F

FIG 4

FIG 9

FIG 5

FIG 6

3

## FIG 7

$VS_i \ (C_i = 0)$

## FIG 8

$VS_i \ (C_i = 1)$

## FIG 10

## FIG 11

| DEZIMAL | BCD | | | |
|---|---|---|---|---|
| | X3 | X2 | X1 | X0 |
| 0 ⎫ 0 | 0 | 0 | 0 | 0 |
| 1 ⎭ | 0 | 0 | 0 | 1 |
| 2 ⎫ 1 | 0 | 0 | 1 | 0 |
| 3 ⎭ | 0 | 0 | 1 | 1 |
| 4 ⎫ 2 | 0 | 1 | 0 | 0 |
| 5 ⎭ | 0 | 1 | 0 | 1 |
| 6 ⎫ 3 | 0 | 1 | 1 | 0 |
| 7 ⎭ | 0 | 1 | 1 | 1 |
| 8 ⎫ 4 | 1 | 0 | 0 | 0 |
| 9 ⎭ | 1 | 0 | 0 | 1 |

## FIG 12

| $CIN_i$ | $COUT_i$ | $A_i + B_i - C_i$ | $A_i + B_i - C_i + 1$ |
|---|---|---|---|
| 0 | 0 | 0 | 1 |
| 1 | 0 | $-1$ | 0 |
| 0 | 1 | $ZB = 5$ | 6 |
| 1 | 1 | $ZB - 1 = 4$ | 5 |

## FIG 13

## FIG 14

## FIG 15

| $Z4_i$ | $Z3_i$ | $Z2_i$ | $Z1_i$ | $Z_i$ | $CIN_i^*$ | $COUT_i$ |
|---|---|---|---|---|---|---|
| 0 | 0 | 0 | 0 | 0 | 1 | 0 |
| 0 | 0 | 0 | 1 | 1 | 0 | 0 |
| 0 | 0 | 1 | 1 | 5 | 1 | 1 |
| 0 | 1 | 1 | 0 | 6 | 0 | 1 |

# FIG 16